# DEMANDE DE BREVET EUROPEEN

(11) **EP 2 105 393 A1**
(43) Date de publication de la demande: **30.09.2009**
(21) Numéro de dépôt: 09004236.7
(22) Date de dépôt: 25.03.2009
(51) Int. Cl.: B65G 47/91

(54) **Préhenseur pneumatique et dispositif de préhension comportant une pluralité de tels préhenseurs**

(30) Priorité: 28.03.2008 FR 0801739
(71) Demandeur: De La Ballina Frères, 12350 Maleville (FR)
(72) Inventeur: De La Ballina, Hélios, 12110 Aubin (FR); De Lazzari, Thierry, 82130 L'Honor de Cos (FR)
(74) Mandataire: Thibon, Norbert

(57) **Abrégé**

L'invention a pour objet un préhenseur pneumatique comportant une ventouse (1) et des moyens de liaison de celle-ci avec un circuit de vide incluant une chambre à vide (3) pour réaliser la saisie d'un objet par aspiration par cette ventouse. Le préhenseur selon l'invention est également muni de moyens d'injection de gaz sous pression dans la ventouse (1) pour réaliser la libération de l'objet saisi, moyens d'injection comprenant un conduit d'injection (41) qui forme un tube de Venturi dont l'aspiration se produit dans le circuit de vide. L'invention s'étend à un dispositif de préhension comportant au moins un préhenseur du type précité.

## Description

La présente invention se rapporte au domaine des dispositifs de prise et de manipulation d'objets par des systèmes à ventouses. Ces dispositifs sont couramment utilisés pour la saisie et le déplacement d'objets de petite taille ou d'objets présentant une fragilité particulière, tels que, à titre d'exemple non limitatif, des composants pour la micro-électronique ou certains produits alimentaires.

Une première catégorie de préhenseurs connus met en oeuvre l'effet Venturi pour réaliser la saisie d'un l'objet grâce à l'aspiration générée dans une ventouse par la circulation d'un flux d'air dans un conduit approprié auquel elle est reliée. Le flux d'air alimentant ce conduit est ensuite coupé pour relâcher l'objet, un éventuel flux complémentaire étant alors injecté en aval de la ventouse pour accélérer la remontée en pression dans celle-ci et la libération de cet objet.

Dans une deuxième catégorie de préhenseurs connus, l'aspiration permettant la saisie de l'objet est réalisée par la mise en relation de la ventouse avec un volume de gaz (classiquement de l'air) mis en dépression par un ensemble de pompage. La libération de l'objet est ensuite réalisée par isolation, grâce à une première vanne appropriée, de la liaison entre la ventouse et le volume de gaz en dépression, puis par injection, grâce à une deuxième vanne, d'un flux de gaz sous pression dans la ventouse (typiquement de l'air comprimé).

Ces derniers préhenseurs offrent la possibilité d'une succession rapide de saisies et de lâchers d'objets par la commutation des vannes reliant la ventouse respectivement au volume en dépression et au circuit d'injection de gaz. Ils sont également d'une architecture plus simple que les préhenseurs à effet Venturi connus, dans la mesure où ils n'imposent pas de contrainte spécifique sur la configuration relative des conduits reliant la ventouse respectivement au volume en dépression et au dispositif d'injection de gaz. En particulier, ils ne nécessitent pas la mise en place d'une évacuation spécifique permanente du gaz alimentant le système. Ils impliquent toutefois l'utilisation concomitante d'un ensemble de pompage et d'un ensemble d'alimentation en gaz sous pression, typiquement un compresseur, ainsi que la mise en oeuvre d'un dispositif électronique approprié pour le pilotage et la synchronisation de la commutation de l'ensemble des vannes.

La présente invention a pour but de proposer un dispositif de préhension d'une architecture simple et souple permettant à la fois de manipuler des objets unitaires, des ensembles d'objets, ou des objets de taille importante, pour un coût réduit. Elle trouve une application privilégiée, mais non exclusive, dans le domaine de la manipulation de produits de boulangerie industrielle lors de leur fabrication, de leur contrôle, de leur tri, ou de leur conditionnement.

Dans ce sens, l'invention a pour objet un préhenseur du type comportant une ventouse, un circuit de vide, et un dispositif d'injection de gaz sous pression dans cette ventouse. Le circuit de vide comprend une chambre à vide reliée par des moyens appropriés à un ensemble de pompage permettant d'y établir une dépression, et un embout de liaison entre ladite chambre à vide et la ventouse. Le dispositif d'injection comprend notamment une buse d'injection reliée par un conduit d'injection à un dispositif d'alimentation en gaz sous pression.

Selon une caractéristique de l'invention, le nez de la buse d'injection débouche, dans la chambre à vide, à proximité de l'extrémité débouchante, dans cette dernière, de l'embout de liaison en ménageant, entre ces deux éléments, un espace libre de faible dimension. Par ailleurs, d'une part, l'axe du conduit d'injection précité est sensiblement confondu avec l'axe de l'embout de liaison, et, d'autre part, le conduit d'injection comporte, en amont du nez de la buse, un rétrécissement et un élargissement successifs de telle manière qu'il forme un tube de Venturi débouchant dans la chambre à vide.

L'invention a également pour objet un dispositif de préhension composé de plusieurs de ces préhenseurs associés de telle manière que les surfaces de préhension définies par leurs ventouses forment une matrice de préhension en deux ou trois dimensions, un tel agencement trouvant une application préférée, mais non exclusive, aux produits de boulangerie industrielle.

Selon une variante, les préhenseurs peuvent être groupés en modules, chaque préhenseur de l'un desdits modules étant relié à une chambre à vide commune, et plusieurs modules étant assemblés pour former la matrice de préhenseurs.

Selon une caractéristique de l'invention, les ventouses de chacun des préhenseurs associés en matrice sont reliées à une chambre à vide commune, et les préhenseurs sont également reliés au même dispositif d'alimentation en gaz comprimé.

Avantageusement, le gaz sous pression injecté est de l'air sec, et le dispositif permettant de l'injecter est alimenté par exemple par un compresseur. Un groupe de pompage permet par ailleurs de créer la dépression recherchée dans la chambre à vide.

Pour plus de clarté dans ce qui suit, on désignera par "amont" et "aval" les parties des différents éléments décrits respectivement les plus proches du dispositif d'injection de gaz sous pression et de l'objet à saisir par la ventouse d'un préhenseur selon l'invention.

Ainsi qu'il a été mentionné plus haut, la section du conduit d'injection décroît, puis augmente de l'amont vers l'aval, jusqu'à celle de ses extrémités qui débouche dans la chambre à vide au voisinage de l'extrémité amont de l'embout reliant la ventouse à ladite chambre à vide. Avantageusement, la section de cet embout de liaison croît également légèrement de l'amont vers l'aval de celui-ci. Ceci permet, en particulier, d'une part, d'homogénéiser les flux circulant vers et dans la ventouse, et, d'autre part, de limiter les pertes de charge entre celle-ci, la chambre à vide et le dispositif d'injection de gaz sous pression.

Selon une autre caractéristique de l'invention, une vanne placée en amont de la buse d'injection est pilotée est pour commander l'injection de gaz sous pression dans ladite buse. L'état de cette vanne définit les états de saisie et de lâcher du préhenseur selon l'invention, ainsi qu'il va maintenant être décrit.

En effet, lorsque la vanne de commande est fermée, aucun gaz ne circule dans le conduit d'injection. La ventouse est donc alors exclusivement reliée à la chambre à vide, via l'embout de liaison décrit plus haut. La différence de pression entre la chambre à vide et la pression atmosphérique conduit alors à une aspiration dans la ventouse, le préhenseur étant donc, dans ce cas, apte à saisir un objet.

Inversement, lorsque la vanne de commande est ouverte, un flux de gaz sous pression est injecté, via la buse d'injection, respectivement dans le conduit d'injection, puis dans l'embout de liaison (de l'extrémité amont duquel l'extrémité débouchante aval du conduit d'injection est très proche), jusqu'à la ventouse. Celle-ci peut alors libérer un objet qu'elle a saisi dans l'état de saisie du préhenseur selon l'invention, ce dernier se trouvant ainsi alors dans son état de lâcher.

Il résulte toutefois également alors de la configuration du conduit d'injection qui forme, ainsi qu'il a été indiqué plus haut, un tube de Venturi débouchant dans la chambre à vide, que la circulation du flux de gaz sous pression engendre, par effet Venturi par ailleurs connu en soi, une aspiration dans ladite chambre à vide via l'espace libre précité existant entre l'extrémité amont de l'embout de liaison et l'extrémité aval du conduit d'injection au sein de celle-ci.

Il s'ensuit que le flux de gaz circulant dans le conduit d'injection et. via l'embout de liaison, dans la ventouse, lorsque le préhenseur selon l'invention est dans son état de lâcher entretient donc alors la dépression dans la chambre à vide par effet Venturi, ce tant que ledit préhenseur est dans ledit état de lâcher.

Selon une autre caractéristique de l'invention, la vanne de commande précitée est une vanne normalement ouverte. Ainsi, le préhenseur est soumis en permanence à l'injection du flux de gaz sous pression, cette dernière n'étant suspendue que lorsque ledit préhenseur est en situation de saisir un objet. En d'autres termes, le préhenseur selon l'invention est avantageusement de manière permanente placé dans son état de lâcher, et n'est amené dans son état de saisie que lorsqu'un objet doit être pris par lui.

Il résulte alors de ce qui précède que l'invention permet ainsi de réduire la capacité du groupe de pompage nécessaire à la création et à l'entretien de la dépression dans la chambre à vide, ce qui permet d'en réduire le coût. Elle permet également de réduire le temps de fonctionnement dudit groupe de pompage, celui-ci pouvant n'être utilisé que pour la création de la dépression initiale dans la chambre à vide, puis, ponctuellement, pour l'ajustement de la valeur de ladite dépression.

Par ailleurs, la seule vanne de commande décrite plus haut, placée en amont de la buse d'injection suffit à piloter la commutation entre les deux états du préhenseur selon l'invention. Outre la réduction de coût qui en découle, notamment au travers d'une simplification de la maintenance de l'ensemble, ceci a pour avantage de permettre une commutation plus rapide entre l'état de saisie et l'état de lâcher de l'objet par le préhenseur selon l'invention.

Avantageusement, l'embout reliant la ventouse à la chambre à vide pénètre cette dernière d'une longueur prédéfinie, typiquement mais de manière non limitative de l'ordre de un à quelques centimètres. Ceci permet de limiter au maximum toute pollution de la chambre à vide par des particules provenant des produits saisis, et trouve un intérêt particulier dans le cadre de l'application préférée de l'invention à la prise et au lâcher de produits de boulangerie industrielle, produits dont la surface comporte fréquemment des impuretés telles que par exemple des particules de farine.

En effet, lorsqu'un tel produit est saisi par le préhenseur, ces particules sont également aspirées et acheminées vers la chambre à vide. Toutefois, grâce à l'invention, lorsque le produit est lâché, l'aspiration créée par l'effet Venturi précité permet de ré-acheminer lesdites particules vers l'extérieur de la chambre à vide via l'embout de liaison entre celle-ci et la ventouse. Ceci, d'une part, permet de réduire, voire de supprimer, tout risque d'encrassement de ladite chambre, et, d'autre part, assure une protection accrue du groupe de pompage, ce qui contribue à diminuer les coûts de maintenance de l'installation.

Selon une caractéristique de l'invention, lorsque plusieurs préhenseurs sont associés en modules ou en matrices, comme c'est le cas, par exemple, dans l'application préférée aux produits de boulangerie industrielle, chacun desdits préhenseurs comporte une vanne permettant la commutation entre son état de saisie et son état de lâcher indépendamment des états des autres préhenseurs de la matrice ou du module. Le pilotage de ces vannes peut alors, selon différentes variantes de réalisation de l'invention, être réalisé par un dispositif dédié pour chaque module, ou inclus dans un dispositif général de pilotage d'un ensemble de modules.

Ainsi qu'il a été évoqué plus haut, chacune des ventouses des préhenseurs de la matrice étant alimentée en permanence par un flux de gaz, la dépression dans la chambre à vide commune est alors d'autant plus facilement entretenue, et l'agencement des préhenseurs en matrice ou en modules n'induit donc pas d'augmentation importante de la capacité du groupe de pompage.

L'agencement des préhenseurs en matrice ou en modules présente par ailleurs de nombreux avantages, en particulier pour les produits de boulangerie industrielle. En effet, il permet en premier lieu la saisie de plusieurs produits unitaires, en vue, à titre d'exemple non limitatif, de leur transport vers une unité de conditionnement après une phase d'examen et de tri.

Un autre avantage important d'un tel agencement est qu'il permet la saisie d'objets dont les dimensions sont supérieures à celles d'une ventouse. Cet avantage trouve tout son intérêt dans le cas des produits de boulangerie de forme allongée ou disposés aléatoirement par exemple sur un convoyeur, ainsi qu'il va maintenant être précisé au travers de l'exemple particulier, non limitatif, des pains de forme "baguette".

En effet, de manière classique, de tels produits, de forme longitudinale relativement étroite, sont couramment déposés sur des convoyeurs appropriés entre les différents postes de fabrication. Il s'ensuit que leur saisie par une ventouse peut s'avérer délicate, notamment selon que ladite ventouse est présentée vers une extrémité du pain ou vers le milieu de celui-ci, et selon que ladite ventouse est ou non centrée par rapport à la largeur dudit pain. Or les pains ne peuvent à l'évidence être rangés régulièrement et de manière répétable sur les convoyeurs afin que leur position relative par rapport à une ou plusieurs ventouses d'un poste de saisie et de transport soit parfaitement contrôlée et reproductible. Il est en outre peu envisageable de réaliser des ventouses dont la forme et les dimensions de la section de préhension soient très proches de la forme et des dimensions de la surface d'un tel pain, le dispositif de préhension et de transport ainsi obtenu n'étant alors plus adapté à des produits unitaires.

L'invention permet de résoudre cette difficulté par la mise en oeuvre de matrices de préhenseurs tels que décrits précédemment et par une commande appropriée d'un ou plusieurs préhenseurs au sein d'un même module ou de modules différents dans le cas d'une matrice de grandes dimensions, plusieurs préhenseurs pouvant alors être utilisés simultanément pour saisir un produit. Pour une telle application, les dimensions de la surface de préhension des ventouses de chacun des préhenseurs de la matrice, ainsi que le maillage desdits préhenseurs au sein de chaque module et/ou de ladite matrice seront définis de manière à optimiser la saisie de ces objets, tout en permettant la saisie unitaire d'autres types de produits.

Il est à noter que, dans un tel agencement, lorsqu'un même produit est saisi par plusieurs préhenseurs selon l'invention, l'effort d'aspiration par les ventouses de ces préhenseurs s'exerce en plusieurs points de ce produit. Ce point présente un avantage particulier lors de la saisie de produits fragiles dans la mesure où il évite de créer, sur ces produits, des contraintes trop inégalement réparties pouvant conduire à leur rupture. Inversement, il est également envisageable, dans le cadre de l'utilisation de matrices ou de modules de préhenseurs selon l'invention pour la saisie de produits fragiles, de ne réaliser, dans la chambre à vide, qu'une très légère dépression par rapport à la pression atmosphérique. Même si l'effort d'aspiration exercé par chacune des ventouses est alors trop faible pour permettre la saisie effective d'un produit, la mise en oeuvre de plusieurs préhenseurs permet tout de même de réaliser cette saisie tout en préservant le produit de ruptures éventuelles résultant des contraintes exercées sur lui par les ventouses.

L'invention permet donc de réaliser un dispositif polyvalent à ventouses pour la préhension et le transport d'objets unitaires de petites ou grandes dimensions. Par ailleurs, l'utilisation des préhenseurs selon l'invention ne nécessite pas la mise en oeuvre de groupe de pompage important pour les opérations de saisie. D'autre part, la commutation entre l'état de saisie et l'état de lâcher desdits préhenseurs est simple et rapide, puisqu'elle fait appel au changement d'état d'une seule vanne. Dans le cadre de son application préférée aux produits de boulangerie industrielle, l'invention permet en outre de limiter la pollution de la chambre à vide à laquelle sont reliées les ventouses des préhenseurs permettant cette saisie.

L'invention sera maintenant plus complètement décrite dans le cadre de caractéristiques préférées et de leurs avantages, en faisant référence aux figures qu'elle comporte, dans lesquelles :
- la figure 1 est un schéma de principe présentant un dispositif de préhension comportant plusieurs préhenseurs selon l'invention associés sous forme de module,
- la figure 2 est une vue schématique en coupe d'un préhenseur selon l'invention, dans son état de saisie d'un objet,
- la figure 3 est une vue schématique en coupe d'un préhenseur selon l'invention, dans son état de lâcher d'un objet,
- et les figures 4A, 4B, et 4C sont des vues schématiques en perspective illustrant le fonctionnement d'une matrice de préhenseurs selon l'invention pour la saisie, le transport, et la libération d'objets unitaires à déplacer d'un premier à un deuxième convoyeur.

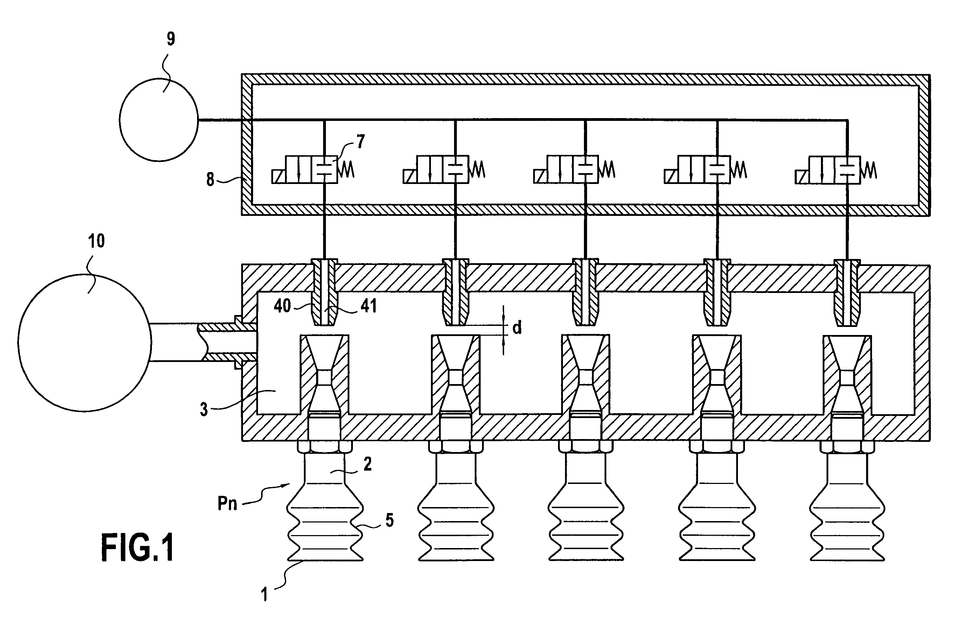

La figure 1 présente un dispositif de préhension selon l'invention dans le cadre de l'application préférée, mais non exclusive, de celle-ci aux produits de boulangerie industrielle.

Dans ce dispositif, n préhenseurs Pn selon l'invention sont associés pour former un module de préhension, plusieurs modules pouvant ensuite être associés pour former une matrice de préhenseurs en deux ou trois dimensions.

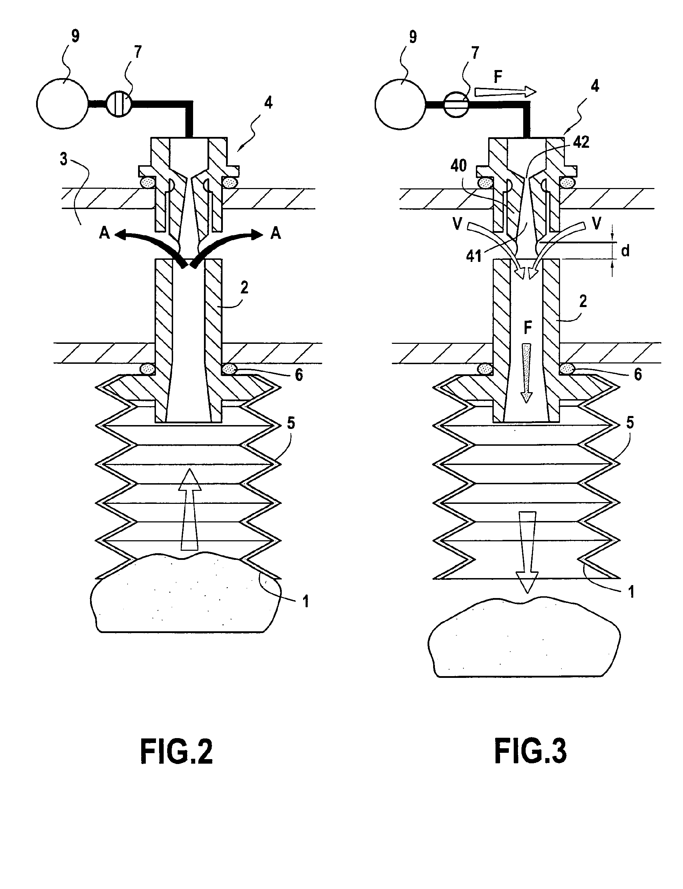

Chacun des préhenseurs Pn, plus précisément représenté par les figures 2 et 3, comporte une ventouse 1 reliée à une chambre à vide commune 3, et est, par ailleurs, relié à un dispositif commun 9 d'alimentation en gaz sous pression.

La chambre à vide commune d'un tel dispositif de préhension peut, selon différentes variantes de réalisation, être reliée à un groupe de pompage 10 dédié, de petite taille, ou être reliée, par un ensemble de conduits à vide appropriés, à un groupe de pompage de plus grande taille permettant de mettre en dépression les N chambres à vide de N modules d'une matrice de préhenseurs.

De même, le dispositif commun 9 d'alimentation en gaz sous pression d'un tel dispositif de préhension peut être lui-même relié, selon différentes variantes de réalisation, à une alimentation dédiée en gaz sous pression, ou, au moyen de conduits appropriés, à un compresseur alimentant en gaz sous pression les N modules d'une matrice de préhenseurs.

Pour plus de clarté dans ce qui suit, et ainsi qu'il a été mentionné précédemment, on désignera par "amont" et "aval" les parties des éléments décrits respectivement les plus proches du dispositif d'injection de gaz sous pression et de l'objet à saisir par le préhenseur selon l'invention.

En référence aux figures 2 et 3 plus particulièrement, chaque préhenseur Pn selon l'invention comporte un embout 2 de liaison de la ventouse 1 à un volume de gaz en dépression placé dans la chambre à vide 3, ainsi qu'un dispositif d'injection de gaz sous pression 4 comprenant une buse d'injection 40 qui sera décrite plus loin. De manière classique, le gaz sous pression peut être de l'air sec issu d'un compresseur.

Selon le mode de réalisation présenté par les figures, la ventouse 1 est reliée à l'embout 2 au moyen d'un soufflet 5 dont la déformation permet, notamment, la saisie d'objets présentant des hauteurs différentes.

De manière connue en soi, la dépression dans la chambre à vide 3 est créée par un groupe de pompage 10 (schématisé sur la figure 1) relié à ladite chambre.

Selon une caractéristique de l'invention, l'embout de liaison 2 débouche, en son extrémité amont, dans la chambre à vide 3 en pénétrant celle-ci de quelques millimètres au moins, typiquement de l'ordre de un à quelques centimètres. Un dispositif classique, à titre d'exemple non limitatif un ensemble à bride et joint torique 6, permet de réaliser l'étanchéité de la liaison entre l'embout de liaison 2 et la chambre à vide 3 dans la zone d'insertion de celui-ci dans cette dernière.

Selon une autre caractéristique de l'invention, la buse d'injection 40 comporte un conduit d'injection 41 dont l'extrémité aval, qui forme le nez de la buse 40, débouche dans la chambre à vide 3, à proximité de l'extrémité amont de l'embout de liaison 2 dans celle-ci. Selon un mode de réalisation préféré de l'invention, la distance d, dans la chambre à vide 3, entre l'extrémité aval du conduit d'injection 41 et l'extrémité amont de l'embout de liaison 2 est faible (au maximum de l'ordre de quelques millimètres), mais non nulle, de telle manière qu'il n'existe aucun contact entre elles. L'axe X du conduit d'injection 41 est par ailleurs confondu avec l'axe de l'embout de liaison 2.

Selon l'invention, la section du conduit d'injection 41 présente, de sa partie amont à sa partie aval, successivement une diminution formant un rétrécissement 42, puis un élargissement, de telle manière que ladite section, à l'extrémité aval dudit conduit d'injection dans la chambre à vide, soit sensiblement égale à la section amont de l'extrémité de l'embout de liaison 2 dans ladite chambre à vide. Le conduit d'injection 41 forme ainsi un tube de Venturi débouchant dans la chambre à vide, tube de Venturi dont le fonctionnement spécifique sera décrit ci-après.

Il est à noter que, de manière similaire à l'agencement de l'embout de liaison 2 au regard de la chambre à vide 3, un dispositif classique, par exemple un dispositif à bride et joint torique, permet d'assurer l'étanchéité entre la buse d'injection et la chambre à vide dans la zone d'insertion de ladite buse dans cette dernière.

Avantageusement, une vanne 7 (schématisée sur les figures) est placée en amont du rétrécissement 42 du conduit d'injection 41, et permet de commander l'injection de gaz.

L'état de la vanne 7 permet de définir les états de saisie et de lâcher du préhenseur selon l'invention.

Dans l'état de saisie illustré par la figure 2, la vanne 7 du préhenseur est fermée. La ventouse 1 se trouve alors en communication exclusive avec la chambre à vide 3, en dépression par rapport à l'atmosphère. Il en résulte un effet d'aspiration représenté par les flèches A sur la figure 2, et la saisie possible d'un objet par la ventouse 1.

Dans l'état de lâcher du préhenseur, plus spécifiquement illustré par la figure 3, la vanne 7 est ouverte et autorise l'injection de gaz sous pression (typiquement de l'air sec issu d'un compresseur, ainsi que précisé plus haut) dans la ventouse 1 par l'intermédiaire du conduit d'injection 41 et de l'embout de liaison 2, selon une direction représentée par la flèche F sur la figure 3. Il résulte alors de l'effet Venturi lié à la configuration du tube d'injection 41 et à son agencement au sein de la chambre à vide 3 par rapport à l'embout de liaison 2 que la circulation de ce flux de gaz engendre une aspiration dans la chambre à vide 3 par le biais de l'espace défini par la distance d précitée. Cette aspiration est représentée par les flèches V sur la figure 3.

Selon une caractéristique précédemment mentionnée, la vanne 7 est une vanne "normalement ouverte". Le préhenseur selon l'invention est donc maintenu en permanence dans son état de lâcher, dans lequel un flux de gaz est injecté dans la ventouse 1 via le conduit d'injection 41 et l'embout de liaison 2, et la commutation vers l'état de saisie n'est réalisée que lorsque ledit préhenseur doit prendre un objet.

Il s'ensuit que la dépression dans la chambre à vide est alors entretenue quasiment en permanence, sans nécessité d'avoir recours au groupe de pompage, ce qui permet de diminuer la taille et la puissance de celui-ci ainsi que ses périodes de fonctionnement, augmentant ainsi sa durée de vie.

Dans le cadre de l'application préférée de l'invention à la saisie et le lâcher de produits de boulangerie industrielle, le mode de fonctionnement précité permet de plus de protéger la chambre à vide 3 de tout encrassement par des impuretés provenant des produits, impuretés telles que, par exemple, des particules de farine.

En effet, lors de la saisie d'un produit, de telles particules sont aspirées en même temps que ledit produit, et sont acheminées vers la chambre à vide 3 ou, selon leur taille, peuvent rester piégées dans l'embout de liaison 2. Lorsque le préhenseur selon l'invention passe dans son état de lâcher, l'aspiration par effet Venturi précitée permet de ré-acheminer vers la ventouse 1 et vers l'extérieur du préhenseur les particules qui sont éventuellement entrées dans la chambre à vide 3, le flux d'air injecté agissant également, par ailleurs, dans l'embout de liaison 2, comme un flux de balayage permettant d'évacuer d'éventuelles particules piégées au sein de celui-ci.

Selon une autre caractéristique de l'invention, lorsque n préhenseurs selon l'invention sont associés pour former un module de préhension tel qu'évoqué plus haut, et ainsi que le montre la figure 1, la commande des vannes 7 permettant l'alimentation en gaz sous pression de chacun des n préhenseurs Pn du module est avantageusement centralisée dans un boîtier de pilotage unique 8. Ce boîtier de pilotage 8 peut, selon différentes variantes de réalisation, posséder une alimentation électrique et un dispositif d'automatisation dédiés, ou être relié à une alimentation et à un dispositif d'automatisation généraux assurant la gestion de N modules d'une matrice de préhenseurs.

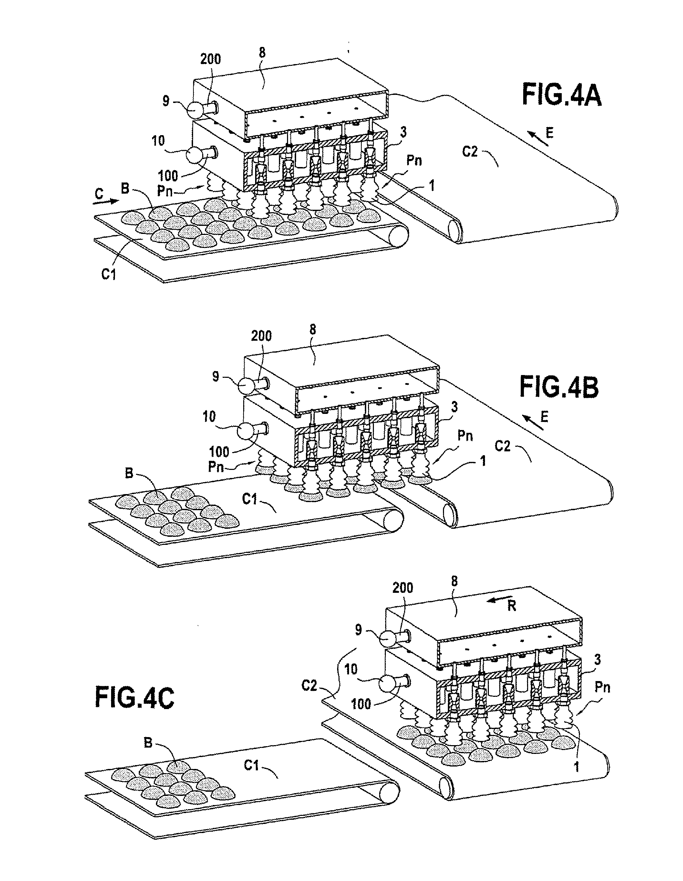

Un tel agencement permet, ainsi que le montrent les figures 4A, 4B. et 4C, la réalisation d'un ensemble de préhension et de transport compact et d'un fonctionnement simple et souple. Dans l'exemple présenté par ces figures, des produits B circulant sur un convoyeur C1 défilant selon la direction représentée par la flèche C doivent être pris sur ce convoyeur et déposés sur un convoyeur voisin C2 se déplaçant selon la direction indiquée par la flèche E. A titre d'exemple non limitatif, dans l'application préférée de l'invention aux produits de boulangerie industrielle, il peut s'agir d'acheminer un nombre prédéfini de produits B vers une unité de conditionnement.

Pour réaliser cette opération, le module ou la matrice de préhenseurs Pn selon l'invention est, dans un premier temps (figure 4A), dans sa position de prise dans laquelle les ventouses 1 des préhenseurs Pn sont amenées, par un dispositif mécanique approprié, au voisinage de la surface des produits B disposés sur le convoyeur C1. Dans cette position, les vannes 7 (placées dans le boîtier commun 8) correspondant aux objets B à saisir sont commandées en fermeture, ce qui permet de saisir les objets B à déposer sur le convoyeur C2. Le module ou la matrice de préhenseurs Pn selon l'invention est ensuite déplacé (figure 4B) selon la direction représentée par la flèche D pour amener les produits B saisis au-dessus du convoyeur C2. Enfin (figure 4C), les vannes 7 correspondant aux préhenseurs activés dans leur état de saisie d'objets B sont commandées en ouverture, ce qui permet la libération desdits objets B au-dessus du convoyeur C2. Pour terminer, le module ou la matrice de préhenseurs selon l'invention est ramené, selon la direction indiquée par la flèche R sur la figure 4C, dans sa position initiale au-dessus du convoyeur C1.

Durant ces différentes phases, la chambre à vide commune 3, ainsi que le boîtier commun d'alimentation 8 sont déplacés en même temps que les préhenseurs Pn, ainsi que le montrent les figures 4A à 4C. Ceci présente notamment l'avantage de limiter le risque de fuites au niveau des liaisons entre la chambre à vide commune 3 et, d'une part, les ventouses de chacun des préhenseurs Pn, ainsi que, d'autre part, les buses d'injection de chacun desdits préhenseurs. Par ailleurs, un seul conduit 100 (schématiquement représenté sur les figures 4A à 4C) ainsi qu'un unique conduit 200 (également schématiquement représenté sur les figures 4A à 4C) permettent de relier le module ou la matrice de préhenseurs selon l'invention respectivement à un ensemble de pompage et à un ensemble d'alimentation en gaz sous pression. Il s'ensuit une simplification du dispositif mécanique permettant le déplacement du module ou de la matrice de préhenseurs selon l'invention, ainsi qu'une limitation des risques de fuite lors de ces déplacements.

Il est à noter que, selon un mode de réalisation préféré de l'invention dans un agencement en module ou en matrice des préhenseurs, les dimensions et formes de chacune des ventouses 1 des n préhenseurs d'un module, ainsi que la répartition de ces ventouses au sein d'un module seront, ainsi que le maillage en modules d'une éventuelle matrice de N modules de préhenseurs, définis pour optimiser les opérations de saisie, de lâcher, et de transport des produits manipulés. En particulier, dans le cadre de l'application préférée de l'invention aux produits de boulangerie industrielle, les dimensions et formes des ventouses, ainsi que le maillage en préhenseurs des modules ou matrices de N modules seront définis pour permettre, par l'activation sélective d'un nombre approprié de préhenseurs, la saisie ou le lâcher d'objets de forme complexe tels que, à titre d'exemples non exclusifs des baguettes ou demi-baguettes de pain. Il est également à noter que l'invention ne saurait être limitée aux modes de mise en oeuvre qui viennent d'être décrits, mais qu'elle s'étend également à toute variante passant par le biais de moyens équivalents ainsi qu'à toute combinaison techniquement opérante de tels moyens.

## Revendications

1. Préhenseur pneumatique **caractérisé en ce qu'**il comporte une ventouse (1), des moyens de liaison de cette ventouse avec un circuit de vide pour réaliser la saisie d'un objet par aspiration par celle-ci, ainsi que des moyens pour lâcher ledit objet par injection de gaz sous pression dans ladite ventouse, et **en ce que** le circuit d'injection de gaz sous pression comprend un conduit d'injection (41) qui forme un tube de Venturi dont l'aspiration se produit dans le circuit de vide.

2. Préhenseur selon la revendication 1, **caractérisé en ce que** le circuit de vide comprend une chambre à vide (3) et un embout de liaison (2) dudit préhenseur à ladite chambre à vide et **en ce que** la distance (d), au sein de la chambre à vide (3), entre les extrémités débouchantes respectives de l'embout de liaison (2) et du conduit d'injection (41) est de l'ordre de quelques millimètres au maximum.

3. Préhenseur selon l'une ou l'autre des revendications 1 ou 2, **caractérisé en ce qu'**une vanne (7) normalement ouverte placée en amont du conduit d'injection (41) permet de commander l'injection de gaz sous pression dans ledit conduit d'injection.

4. Procédé de saisie et de lâcher d'un objet au moyen d'un préhenseur selon la revendication 3, **caractérisé en ce que :**
- dans l'étape de lâcher, la vanne de commande (7) est ouverte et laisse circuler un flux d'air dans les conduits d'injection (41) et de liaison (2),
- dans l'étape de saisie, la vanne de commande (7) est fermée.

5. Module de préhension et de transport d'objets **caractérisé en ce qu'**il est composé d'au moins un préhenseur (Pn) selon la revendication 3 et **en ce que** les ventouses (1) de chacun desdits préhenseurs (Pn) sont reliées à une chambre à vide commune (3).

6. Module de préhension et de transport d'objets selon la revendication 5, **caractérisé en ce que** les conduits d'injection (41) de chacun desdits préhenseurs (Pn) sont reliés à une alimentation commune (9) en gaz sous pression.

7. Module de préhension et de transport d'objets selon l'une ou l'autre des revendications 5 ou 6, **caractérisé en ce que** les vannes de commande (7) de chacun desdits préhenseurs (Pn) sont reliées à un dispositif commun de pilotage placé dans un boîtier commun (8) permettant le changement d'état sélectif d'une ou plusieurs desdites vannes (7) indépendamment de l'état des autres vannes des préhenseurs du module.

8. Matrice de préhension et de transport de produits de boulangerie industrielle, **caractérisée en ce qu'**elle comporte au moins un module de préhension et de transport selon l'une quelconque des revendications 5 à 7 et **en ce que** les formes et dimensions des surfaces de préhension des ventouses (1) des préhenseurs, ainsi que l'agencement desdits préhenseurs au sein desdits modules et l'agencement desdits modules au sein de ladite matrice, ainsi que le pilotage des vannes de commande (7) desdits préhenseurs sont définis pour permettre la saisie, le transport, et le lâcher de produits de boulangerie industrielle disposés aléatoirement sur un convoyeur approprié.
